# EUROPEAN PATENT APPLICATION

(11) **EP 2 889 552 A1**
(43) Date of publication of application: **01.07.2015**
(21) Application number: 12883413.2
(22) Date of filing: 23.08.2012
(51) Int. Cl.: F25B 7/00, F25B 1/00

(54) **REFRIGERATION DEVICE**

(71) Applicant: Mitsubishi Electric Corporation, Tokyo 100-8310 (JP)
(72) Inventor: SUGIMOTO, Takeshi, Tokyo 100-8310 (JP); NOMOTO,So, Tokyo 100-8310 (JP); ISHIKAWA, Tomotaka, Tokyo 100-8310 (JP); TAKAYAMA, Keisuke, Tokyo 100-8310 (JP); IKEDA, Takashi, Tokyo 100-8310 (JP)
(74) Representative: Pfenning, Meinig & Partner GbR
(86) International application number: PCT/JP2012/071263
(87) International publication number: WO 2014/030236

(57) **Abstract**

A refrigeration apparatus includes a high-temperature side circulation circuit A and a low-temperature side circulation circuit B. The high-temperature side circulation circuit A is configured by connecting a high-temperature side compressor 1, a high-temperature side condenser 2, a high-temperature side expansion valve 3, and a high-temperature side evaporator 4 of a cascade heat exchanger 14 to one another. The low-temperature side circulation circuit B is configured by connecting a low-temperature side compressor 5, a low-temperature side condenser 6 of the cascade heat exchanger 14, a receiver 7 that stores a liquid refrigerant, a solenoid valve 8, a low-temperature side expansion valve 9, and a low-temperature side evaporator 10 to one another. A refrigerant in the low-temperature side circulation circuit B includes a zeotropic refrigerant mixture containing at least CO₂ and R32. The content of R32 in the entire zeotropic refrigerant mixture is 50% to 74% by mass, and the GWP of the zeotropic refrigerant mixture is equal to or less than 500.

## Description

### Technical Field

The present invention relates to a refrigeration apparatus that performs a binary refrigeration cycle.

### Background Art

In the conventional refrigeration apparatus, a low-temperature side circulation circuit in which a low-temperature refrigerant circulates and a high-temperature side circulation circuit in which a high-temperature refrigerant circulates are connected to one another by a cascade condenser. For such a refrigeration apparatus, the use of carbon dioxide (CO₂) as a refrigerant in a low-temperature side circulation circuit has been proposed (see, for example, Patent Literature 1). Since CO₂ occurs in nature and has a low global warming potential (GWP), the use of CO₂ can avoid damaging the ozone layer even upon leakage of CO₂ from a refrigeration cycle apparatus due to an unexpected accident. Thus, a refrigeration apparatus friendly to the global environment can be provided.

### Citation List

### Patent Literature

Patent Literature 1: Japanese Unexamined Patent Application Publication No. 2004-190917 (page 14, Fig. 1)

### Summary of Invention

### Technical Problem

To achieve a low-GWP refrigeration apparatus, CO₂ is preferably used as a refrigerant in a low-temperature side circulation circuit. However, the use of CO₂ poses the following problems. Specifically, tuna, for example, requires refrigeration in a freezer at temperatures of about -50 degrees C, and this can be done by setting the evaporating temperature in a low-temperature side evaporator to about -80 degrees C to -60 degrees C. However, when a single refrigerant of CO₂ is used in a low-temperature side circulation circuit, such an evaporating temperature cannot be achieved because the triple point of CO₂ is -56.6 degrees C. That is, in a refrigeration apparatus that performs a binary refrigeration cycle using a single refrigerant of CO₂, it is difficult to achieve an evaporating temperature of about -80 degrees C. The use of R404A for the low-temperature side circulation circuit can reduce the evaporating temperature to about -65 degrees C. However, R404A, which has a GWP of 3920, may accelerate global warming upon leakage of a refrigerant due to an accident.

In addition, in a refrigeration apparatus, an appropriate type of zeotropic refrigerant mixture is generally known to be used to obtain a low evaporating temperature that is unattainable when a single refrigerant is used. Thus, the use of a zeotropic refrigerant mixture containing CO₂ as one mixture component is expected to obtain both a low evaporating temperature and a low GWP. However, a definite type of component to be contained in the refrigerant mixture, in addition to CO₂, that can obtain an evaporating temperature of 80 degrees C to -60 degrees C has not yet been proposed in the conventional techniques.

The inventors of the present invention have examined this issue and reached the conclusion that the use of a zeotropic refrigerant mixture containing at least CO₂ and R32 in a low-temperature side circulation circuit can obtain a composition of a zeotropic refrigerant mixture with an evaporating temperature of 80 degrees C to -60 degrees C.

The present invention has been made to solve the above-mentioned problem, and has as its object to provide a refrigeration apparatus that uses a zeotropic refrigerant mixture containing at least CO₂ and R32 in a low-temperature side circulation circuit to obtain an evaporating temperature of -80 degrees C to -60 degrees C in a low-temperature side evaporator of the low-temperature side circulation circuit with a low GWP.

### Solution to Problem

A refrigeration apparatus according to the present invention includes: a high-temperature side circulation circuit configured by connecting a high-temperature side compressor, a high-temperature side condenser, a high-temperature side expansion valve, and a high-temperature side evaporator of a cascade heat exchanger to one another; and a low-temperature side circulation circuit configured by connecting a low-temperature side compressor, a low-temperature side condenser of the cascade heat exchanger, a receiver that stores a liquid refrigerant, a solenoid valve, a low-temperature side expansion valve, and a low-temperature side evaporator to one another. A refrigerant in the low-temperature side circulation circuit includes a zeotropic refrigerant mixture containing at least CO₂ and R32. The content of R32 in the entire zeotropic refrigerant mixture is 50% to 74% by mass. The GWP of the zeotropic refrigerant mixture is equal to or less than 500.

### Advantageous Effects of Invention

The present invention can provide a refrigeration apparatus which has a low GWP and includes a low-temperature side evaporator that achieves an evaporating temperature of -80 degrees C to -60 degrees C.

### Brief Description of Drawings

[Fig. 1] Fig. 1 is a refrigerant circuit diagram of a refrigeration apparatus according to Embodiment of the present invention.
[Fig. 2] Fig. 2 is a gas-liquid equilibrium diagram showing the characteristics of a zeotropic refrigerant mixture containing two types of refrigerants.
[Fig. 3] Fig. 3 shows graphs of the relationships between the mole fraction of CO₂ and the freezing point in a CO₂ refrigerant mixture.
[Fig. 4] Fig. 4 shows graphs for comparisons of the refrigeration capacity and the COP as functions of the mixing ratio of CO₂ and R32 in Embodiment of the present invention.
[Fig. 5] Fig. 5 illustrates a configuration in which a configuration for detecting a circulation composition is added to the refrigerant circuit of Fig. 1.
[Fig. 6] Fig. 6 is a graph for explaining principle 1 of detecting a circulation composition in a composition calculator illustrated in Fig. 5.
[Fig. 7] Fig. 7 is a graph for explaining principle 2 of detecting a circulation composition in the composition calculator illustrated in Fig. 5.

### Description of Embodiment

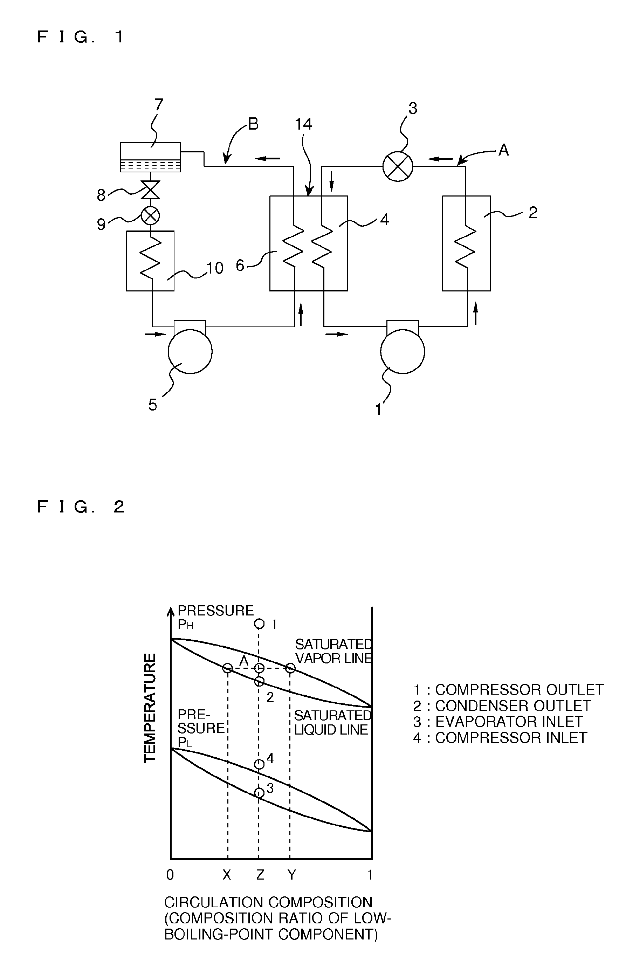

Fig. 1 is a refrigerant circuit diagram of a refrigeration apparatus according to Embodiment of the present invention.

The refrigeration apparatus includes a high-temperature side circulation circuit A and a low-temperature side circulation circuit B. The high-temperature side circulation circuit A forms a series connection of a high-temperature side compressor 1, a high-temperature side condenser 2, a high-temperature side expansion valve 3, and a high-temperature side evaporator 4. The high-temperature side circulation circuit A uses R410A, R134a, R32, or a HFO refrigerant.

The low-temperature side circulation circuit B forms a series connection of a low-temperature side compressor 5, a low-temperature side condenser 6, a low-temperature side expansion valve 9, and a low-temperature side evaporator 10, and includes a receiver 7 for storing an excess refrigerant and a solenoid valve 8 both at the outlet of the low-temperature side condenser 6. The low-temperature side circulation circuit B uses a zeotropic refrigerant mixture containing at least CO₂ and R32. The zeotropic refrigerant mixture refers to a refrigerant mixture containing two or more types of refrigerants having different boiling points. Note that CO₂ is a low-boiling-point refrigerant and R32 is a high-boiling-point refrigerant.

The high-temperature side circulation circuit A and the low-temperature side circulation circuit B share a cascade condenser 14. The cascade condenser 14 includes the high-temperature side evaporator 4 and the low-temperature side condenser 6. The cascade condenser 14 is implemented using, for example, a plate heat exchanger and exchanges heat with a high-temperature refrigerant circulating in the high-temperature side circulation circuit A and a low-temperature refrigerant (a zeotropic refrigerant mixture) circulating in the low-temperature side circulation circuit B.

Features of the composition of a refrigerant circulating in the refrigeration cycle of the refrigeration apparatus using a zeotropic refrigerant mixture specified in the foregoing way for the low-temperature side circulation circuit B will now be described. The zeotropic refrigerant mixture exhibits characteristics as shown in Fig. 2.

Fig. 2 is a gas-liquid equilibrium diagram showing the characteristics of a zeotropic refrigerant mixture containing two types of refrigerants. Referring to Fig. 2, the ordinate represents the temperature, the abscissa represents the circulation composition (that is, the composition ratio of a low-boiling-point component where CO₂ has a low boiling point and R32 has a high boiling point), and the pressure is used as a parameter. Fig. 2 shows the characteristics of the zeotropic refrigerant mixture at each of a high pressure P_{H} and a low pressure P_{L} in the low-temperature side circulation circuit B. As shown in Fig. 2, in a two-component zeotropic refrigerant mixture, a saturated vapor line and a saturated liquid line are determined depending on the pressure. Note that the circulation composition is "0" when only a high-boiling-point component is used, and is "1" when only a low-boiling-point component is used. In a refrigerant mixture, a saturated liquid line and a saturated vapor line are determined depending on the composition, as shown in Fig. 2.

A region above the saturated vapor line represents a superheated vapor state, a region below the saturated liquid line represents a subcooling state, and a region enclosed by the saturated vapor line and the saturated liquid line represents a gas-liquid two-phase state. Referring to Fig. 2, Z indicates the composition of a refrigerant enclosed in the refrigeration cycle, and points 1 to 4 indicate representative points of the refrigeration cycle. Specifically, point 1 indicates a compressor outlet, point 2 indicates a condenser outlet, point 3 indicates an evaporator inlet, and point 4 indicates a compressor inlet.

In the refrigeration cycle using a zeotropic refrigerant mixture, the composition of a refrigerant circulating in the refrigeration cycle (circulation composition) is not necessarily the same as the composition of a refrigerant charged in the refrigeration cycle (charging composition). This is because in a gas-liquid two-phase portion of the refrigeration cycle indicated by point A in Fig. 2, the liquid composition is X, which is lower than the circulation composition Z, and the vapor composition is Y, which is higher than the circulation composition. In other words, in the gas-liquid two-phase portion indicated by point A, a liquid rich in a high-boiling-point component and a vapor rich in a low-boiling-point component are present.

An excess liquid refrigerant generated depending on the operating conditions and the load conditions in the refrigeration apparatus is accumulated in the receiver 7. The refrigerant in the receiver 7 is separated into a liquid refrigerant rich in a high-boiling-point component and a gas refrigerant rich in a low-boiling-point component, and the liquid refrigerant rich in a high-boiling-point component is stored in the receiver 7. Thus, in the presence of the liquid refrigerant in the receiver 7, the circulation composition of the zeotropic refrigerant mixture circulating in the low-temperature side circulation circuit B is likely to have a larger amount of low-boiling-point component than the charging composition. That is, the circulation composition (that is, the composition ratio of a low-boiling-point component) is likely to increase.

When the operating conditions and the load conditions change so that the amount of refrigerant stored in the receiver 7 changes, the circulation composition in the refrigeration cycle changes. With a change in circulation composition in the refrigeration cycle, the relationship between the pressure and the saturation temperature of the refrigerant changes, as can be seen from Fig. 2, and the cooling capacity also changes. Thus, to make the refrigeration cycle operate stably with a predetermined performance, it is necessary to detect the circulation composition in the refrigeration cycle accurately, and optimally control, for example, the rotation speed of the low-temperature side compressor 5 and/or the opening degree of the low-temperature side expansion valve 9 to adjust the refrigerant flow rate, in accordance with the detected circulation composition.

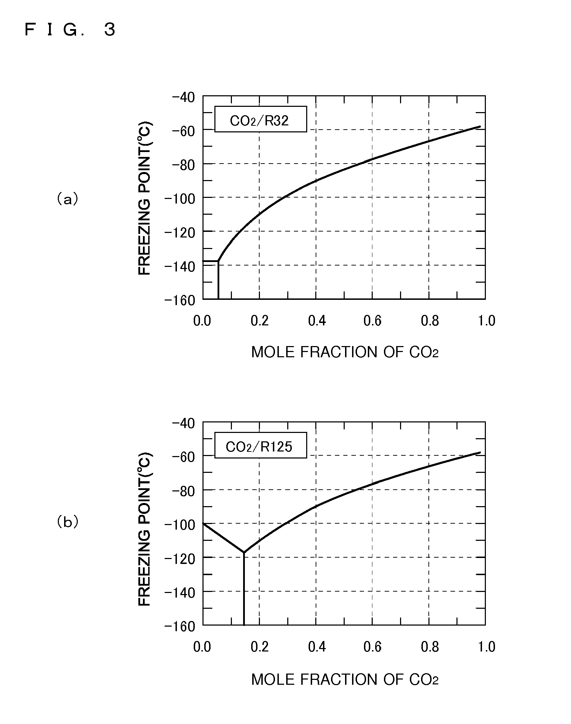

Table 1 below shows the values of the physical characteristics of CO₂ refrigerant mixtures each containing CO₂ as a refrigerant mixture component and one of three types of refrigerants to be combined with CO₂. Table 1 also shows the GWP and the flame resistance of each type of refrigerant to be contained in the refrigerant mixture, the mixing ratio (the mole ratio and the mass ratio) between a refrigerant to be contained in the refrigerant mixture and CO₂, the GWP of a refrigerant mixture with the mixing ratio, the freezing point of the refrigerant mixture, and the -70 degrees C temperature gradient of the refrigerant mixture. Fig. 3 shows the mole fraction of CO₂ and the freezing point in the CO₂ refrigerant mixture. Fig. 3 shows in (a) a refrigerant mixture containing R32, and in (b) a refrigerant mixture containing R125.

**[Table 1]**

| Refrigerant to be Mixed | | Flame Resistance | Mixing Ratio (CO₂: Refrigerant) | | GWP after Mixture (Calculated in Mass Ratio) | Freezing Point after Mixture (Degrees C) | -70 Degrees C Temperature Gradient (K) |
|---|---|---|---|---|---|---|---|
| Name | GWP (alone) | | Mole Ratio | Mass Ratio | | | |
| R290 | 3 | Poor | 71:29 | 71:29 | 1.58 | -72 | Unclear |
| R32 | 675 | Fair | 54:46 | 50:50 | 338 | -81 | 11.9 |
| R125 | 3500 | Good | 50:50 | 27:73 | 2555 | -83 | 11.2 |

Possible examples of a combination that can keep the freezing point below -70 degrees C include R290, R32, and R125, as shown in Table 1. However, R290 has a poor flame resistance, that is, is flammable, is required in a large amount in, for example, a display case or a unit cooler, and thus is difficult to use due to concerns for safety.

Regarding R125, the GWP is 3500 in itself, and is more than 2000 even when it is mixed with CO₂. Thus, the use of R125 is difficult in terms of preventing global warming.

Regarding R32, the GWP is 675 in itself, which is sufficiently lower than that of R125. A mixture of R32 with CO₂ can keep the GWP lower than that in the case without a mixture. Thus, R32 is suitable as a refrigerant that can have no adverse effect in preventing global warming. As shown in (a) of Fig. 3, with a reduction in mole fraction of CO₂, that is, an increase in proportion of R32 in the refrigerant mixture, the freezing point can reduce.

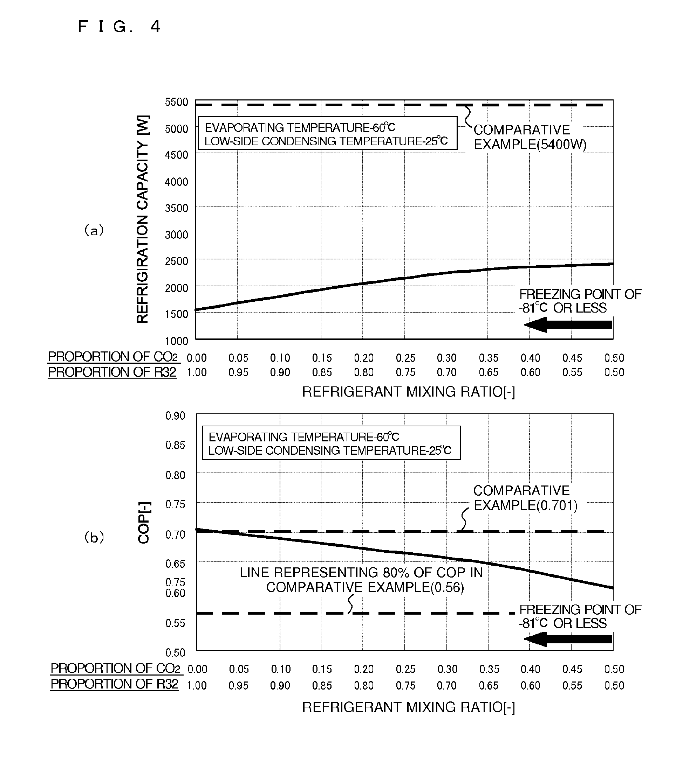

Fig. 4 shows in (a) a graph of the refrigeration capacity [W] corresponding to the refrigerant mixing ratio of CO₂ and R32. Fig. 4 shows in (b) a graph of the COP [-] corresponding to the refrigerant mixing ratio of CO₂ and R32. Fig. 4 shows on the abscissa the mixing ratio range in which the freezing point is -81 degrees C or less. Referring to Fig. 4, the condensing temperature of the refrigerant on the low-temperature side (low-side) is -25 degrees C, and the evaporating temperature of the refrigerant on the low-temperature side (low-side) is -60 degrees C, where the displacement volume of the low-temperature side (low-side) compressor 5 is calculated to be 30 cc. Fig. 4 also shows in (a) and (b) the refrigeration capacity (5400 W) and the COP (0.701) of a single-stage cycle (compressor → condensers expansion valve → evaporator) of 15 HP using conventional R404A as a comparative example. Fig. 4 reveals that a displacement volume of about 60 cc is needed in order to obtain a refrigeration capacity corresponding to that of 15 HP of an R404A single-stage cycle.

To achieve the object of the present invention by setting the freezing point low to keep the evaporating temperature of the low-temperature side evaporator 10 to fall within the range of -80 degrees C to -60 degrees C, the proportion of R32 need only be increased, as described above. As is obvious from Fig. 4, with an increase in proportion of R32, the refrigeration capacity decreases but the COP increases. However, with an increase in proportion of R32, the GWP increases. The GWP is 1 (one) in CO₂ and is 675 in R32 alone as shown in Table 1. Thus, when the content of R32 in the entire zeotropic refrigerant is 50% by mass, the GWP is about 340. When the proportion of R32 is increased to 65% by mass, the GWP is about 440. When the proportion of R32 is further increased to 74% by mass, the GWP is about 500. That is, the freezing point and the GWP have a trade-off relationship. When the proportion of R32 is increased, the freezing point decreases, but the GWP increases.

Thus, in Embodiment, the GWP is kept as low as 500 or less, which is lower than a GWP of 3920 for R404A, and the refrigerant mixing ratio is determined in order to increase the COP to 80% or more of that in the case of using R404A. The line representing 80% of the COP in the case of using R404A is shown in (b) of Fig. 4. This requirement is satisfied when the proportion of R32 is equal to or greater than 50% by mass.

As described above, in the zeotropic refrigerant mixture, R32 is preferably mixed with CO₂ such that the proportion of R32 is 50% to 74% by mass. In this case, the freezing point of the zeotropic refrigerant mixture can be reduced to -81 degrees C or less, which is lower than the triple point of CO₂. Thus, an evaporating temperature of -80 degrees C to -60 degrees C can be obtained, and the refrigeration apparatus has a low GWP.

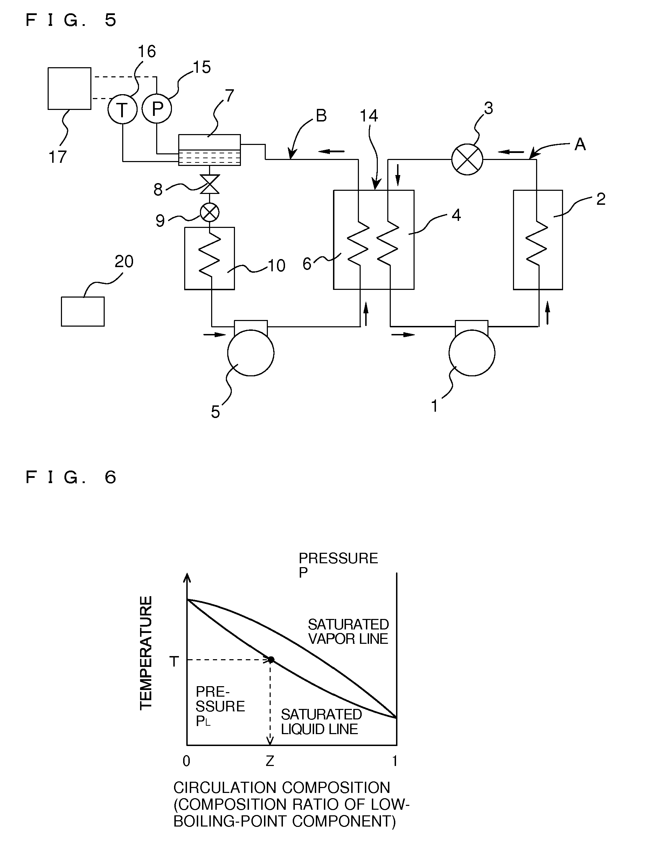

The refrigerant mixture containing CO₂ and R32 includes a zeotropic refrigerant mixture, and disadvantageously has a high temperature gradient (11 to 12 K) as shown in Table 1. Thus, in an appropriate operation, the circulation composition needs to be determined accurately. A configuration for detecting a circulation composition will now be described with reference to Fig. 5.

Fig. 5 illustrates a configuration in which a configuration for detecting a circulation composition is added to the refrigerant circuit of Fig. 1.

As illustrated in Fig. 5, the refrigerant circuit of Fig. 1 further includes a pressure detector 15, a temperature detector 16, and a composition calculator 17. The pressure detector 15 detects the pressure of a liquid refrigerant in the receiver 7. The temperature detector 16 detects the temperature of the liquid refrigerant in the receiver 7. The pressure and temperature of the liquid refrigerant detected by the pressure detector 15 and the temperature detector 16, respectively, are input to the composition calculator 17. Based on the pressure and temperature of the liquid refrigerant input to the composition calculator 17, the composition calculator 17 calculates a circulation composition of a zeotropic refrigerant mixture in a refrigeration cycle. The circulation composition calculated by the composition calculator 17 is output to the controller 20 that controls the entire refrigeration apparatus and is used to control the low-temperature side circulation circuit B. The composition calculation unit of the present invention includes the pressure detector 15, the temperature detector 16, and the composition calculator 17.

The operation of the refrigeration apparatus will now be described.

In the high-temperature side circulation circuit A, a refrigerant discharged from the high-temperature side compressor 1 is condensed in the high-temperature side condenser 2 into a liquid refrigerant. The liquid refrigerant is decompressed by the high-temperature side expansion valve 3, and evaporates in the high-temperature side evaporator 4 of a cascade heat exchanger into a gas refrigerant. This gas refrigerant is drawn by suction into the high-temperature side compressor 1 again, and this cycle is repeated.

On the other hand, in the low-temperature side circulation circuit B, a vapor of a high-temperature high-pressure zeotropic refrigerant mixture compressed by the low-temperature side compressor 5 is liquefied into a condensate by the low-temperature side condenser 6, and the resulting refrigerant enters the receiver 7. The liquid refrigerant that has flowed out of the receiver 7 passes through an open solenoid valve 8 and is decompressed by the low-temperature side expansion valve 9. This refrigerant becomes a low-temperature, low-pressure gas-liquid two-phase refrigerant and flows into the low-temperature side evaporator 10 (a display case or a unit cooler) 10. The refrigerant that has flowed into the low-temperature side evaporator 10 exchanges heat with the air in the display case, evaporates, and returns to the low-temperature side compressor 5. By repeating this cycle, cooled air is generated in the low-temperature side evaporator 10 and cools the inside of the display case.

In the above-described operation, an excess zeotropic refrigerant mixture generated in accordance with the operating conditions and load conditions is accumulated in the receiver 7. As described above, when the amount of refrigerant stored in the receiver 7 changes, the circulation composition in the refrigeration cycle changes. The principle of detecting the circulation composition in the refrigeration cycle by the composition calculator 17 will be described with reference to Fig. 6.

Fig. 6 is a gas-liquid equilibrium diagram of a zeotropic refrigerant mixture.

The composition calculator 17 receives the pressure P and the temperature T of the liquid refrigerant in the receiver 7 from the pressure detector 15 and the temperature detector 16. The saturated liquid temperature of the zeotropic refrigerant mixture at the pressure P changes according to the circulation composition in the refrigeration cycle, as shown in Fig. 6. Thus, supposing that a refrigerant in the receiver 7 is in a saturated liquid state, a circulation composition Z in the refrigeration cycle can be determined from the temperature T and the pressure P detected by the temperature detector 16 and the pressure detector 15, respectively, with reference to the relationship shown in Fig. 6. Therefore, when the relationship among the pressure, the temperature, and the circulation composition is stored in the composition calculator 17 in advance, the circulation composition Z can be calculated based on the pressure P and the temperature T.

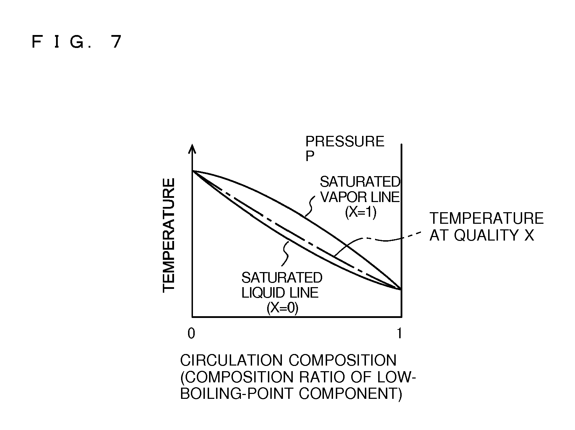

The detection of the circulation composition is not limited to the above-described method and may be performed in the following manner. In a two-component zeotropic refrigerant mixture, the circulation composition can be detected on the basis of a quality X (= mass flow rate of refrigerant vapor/flow rate of entire refrigerant) of a refrigerant and the temperature and the pressure of the refrigerant having the quality X. Specifically, in the two-component zeotropic refrigerant mixture, under a constant pressure P, the temperature of a refrigerant and the circulation composition Z with the quality X have a relationship as indicated by an alternate long and short dashed line in Fig. 7, illustrating the principle of detecting the circulation composition of the two-refrigerant mixture shown in Fig. 7, including a saturated vapor line at a quality X of 1 (one) and a saturated liquid line at zero quality X.

That is, the temperature of the zeotropic refrigerant mixture in a gas-liquid two-phase state having the quality X at the pressure P changes depending on the circulation composition in the refrigeration cycle as shown in Fig. 7. Therefore, with this relationship, the circulation composition in the refrigeration cycle can be detected by determining the pressure, the temperature, and the quality of a refrigerant in a gas-liquid two-phase state including a saturated vapor and a saturated liquid. That is, the circulation composition in the refrigeration cycle can be detected by using the temperature T detected by the temperature detector 16, the pressure P detected by the pressure detector 15, and the quality in the receiver 7.

In Embodiment, the pressure detector 15 is provided to the receiver 7. Alternatively, the pressure detector 15 may be provided on the discharge side of the low-temperature side compressor 5, detect the discharge pressure of the low-temperature side compressor 5, and determine, as the pressure of a liquid refrigerant that has flowed into the receiver 7, the pressure obtained by converting a pressure loss of the low-temperature side condenser 6. In Embodiment, the temperature detector 16 is provided to the receiver 7. Alternatively, the temperature detector 16 may be provided at the outlet of the low-temperature side condenser 6, and determine, as the temperature of a liquid refrigerant that has flowed into the receiver 7, the outlet liquid temperature of the low-temperature side condenser 6.

In this manner, the circulation composition in the case of using the two-component zeotropic refrigerant mixture of CO₂ and R32 for the low-temperature side circulation circuit B can accurately be detected. Thus, the rotation speed of the low-temperature side compressor 5 of the low-temperature side circulation circuit B and/or the opening degree of the low-temperature side expansion valve 9 can be optimally controlled in accordance with the circulation composition, and an ultra-low temperature freezer (for example, for storing tuna) with a low GWP and an ultra-low evaporating temperature of about -80 degrees C to -60 degrees C can be obtained.

As described above, in Embodiment, a refrigerant in the low-temperature side circulation circuit B includes a zeotropic refrigerant mixture containing at least CO₂ and R32 and having a GWP of 500 or less, and the proportion of R32 in the mixture is 50% to 74% by mass. Thus, a refrigeration apparatus which has a low GWP and includes a low-temperature side evaporator 10 that achieves an evaporating temperature of -80 degrees C to -60 degrees C can be obtained. This refrigeration apparatus implements an ultra-low temperature freezer (for example, for storing tuna) having a freezer internal temperature of about -50 degrees C.

Accurate detection of the circulation composition allows control of the rotation speed of the low-temperature side compressor 5 and/or the opening degree of the low-temperature side expansion valve 9 in consideration of a change in circulation composition in the low-temperature side circulation circuit B. Thus, a refrigeration apparatus that can perform optimum control in accordance with the circulation composition and operate stably can be obtained.

### Reference Signs List

1 high-temperature side compressor, 2 high-temperature side condenser, 3 high-temperature side expansion valve, 4 high-temperature side evaporator, 5 low-temperature side compressor, 6 low-temperature side condenser, 7 receiver, 8 solenoid valve, 9 low-temperature side expansion valve, 10 low-temperature side evaporator, 14 cascade condenser, 15 pressure detector, 16 temperature detector, 17 composition calculator, 20 controller, A high-temperature side circulation circuit, B low-temperature side circulation circuit.

## Claims

1. A refrigeration apparatus comprising:
a high-temperature side circulation circuit configured by connecting a high-temperature side compressor, a high-temperature side condenser, a high-temperature side expansion valve, and a high-temperature side evaporator of a cascade heat exchanger to one another; and
a low-temperature side circulation circuit configured by connecting a low-temperature side compressor, a low-temperature side condenser of the cascade heat exchanger, a receiver that stores a liquid refrigerant, a solenoid valve, a low-temperature side expansion valve, and a low-temperature side evaporator to one another, wherein
a refrigerant in the low-temperature side circulation circuit includes a zeotropic refrigerant mixture containing at least CO₂ and R32,
a content of R32 in the entire zeotropic refrigerant mixture is 50% to 74% by mass, and
a GWP of the zeotropic refrigerant mixture is not more than 500.

2. The refrigeration apparatus of claim 1, further comprising:
a composition calculation unit that obtains a composition of the refrigerant circulating in the low-temperature side circulation circuit; and
a controller that controls the low-temperature side circulation circuit based on the composition of the refrigerant obtained by the composition calculation unit.

3. The refrigeration apparatus of claim 2, wherein
the composition calculation unit includes
a pressure detector that detects a pressure of a liquid refrigerant in the receiver,
a temperature detector that detects a temperature of the liquid refrigerant in the receiver, and
a composition calculator that obtains the composition of the refrigerant circulating in the low-temperature side circulation circuit, based on the pressure detected by the pressure detector and the temperature detected by the temperature detector.
